# FASCICULE DE BREVET EUROPEEN

(11) **EP 3 645 305 B1**
(45) Date de publication et mention de la délivrance du brevet: **07.06.2023**
(21) Numéro de dépôt: 18749849.8
(22) Date de dépôt: 29.06.2018
(51) Int. Cl.: B60B 21/04, B60C 15/02, B60B 21/10, B60B 25/04, B60B 25/10, B60B 21/02

(54) **JANTE A CROCHET DE HAUTEUR REDUITE**
RADFELGE MIT FELGENHORN MIT VERRINGERTER HÖHE
WHEEL RIM WITH REDUCED-HEIGHT RIM FLANGE

(30) Priorité: 30.06.2017 FR 1756187; 08.06.2018 FR 1855037
(43) Date de publication de la demande: 06.05.2020
(73) Titulaire: Maxion Wheels Holding GmbH, 53639 Königswinter (DE)
(72) Inventeur: WALSER, Daniel, 63040 Clermont-Ferrand Cedex 9 (FR); VEDY, Bertrand, 63040 Clermont-Ferrand Cedex 9 (FR)
(74) Mandataire: Althaus, Arndt
(86) Numéro de dépôt international: PCT/FR2018/051613
(87) Numéro de publication internationale: WO 2019/002794

(56) Documents cités:
- EP-A1- 0 125 047
- EP-A1- 0 733 000
- EP-A1- 1 216 850
- WO-A1-2016/046201
- US-A- 2 164 984

## Description

### Domaine de l'invention

L'invention a pour objet une jante pour un ensemble roulant et un ensemble roulant constitué par un pneumatique, une jante rigide et une liaison entre pneumatique et jante par extenseur flexible. Un pneumatique comprend, comme on le sait, deux bourrelets destinés à être montés sur des sièges. La présente invention concerne les ensembles roulants dans lesquels un bourrelet de pneumatique n'est pas monté directement sur une jante, rigide, mais est monté sur un extenseur flexible, lequel est monté sur jante.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (un pneumatique, une jante, un extenseur) sont des objets ayant une géométrie de révolution par rapport à leur axe de rotation. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement », et « axialement » signifient respectivement « selon une direction radiale », et « selon la direction axiale ». Les expressions « radialement intérieur, respectivement radialement extérieure signifient « plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Les expressions « radialement intérieur, respectivement radialement extérieur » signifient « plus proche, respectivement plus éloigné, de l'axe de rotation, selon la direction radiale ». Enfin, rappelons encore que, par « coupe radiale » ou « section radiale », on entend une coupe ou une section selon un plan qui contient l'axe de rotation de la jante (et du pneumatique dont celle-ci est équipée).

### État de la technique

Dans le document EP 0 125 047 est proposé un ensemble roulant dans lequel un bourrelet d'un pneumatique est collé sur un anneau métallique lui-même fixé sur une jante.
Dans le document WO2016/046197, il est proposé d'insérer un extenseur flexible entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux extenseurs identiques. En considérant les conventions de langage rappelées ci-dessus, et en se reportant à la façon dont on monte sur une jante un tel extenseur, un tel extenseur comprend, axialement de l'intérieur vers l'extérieur, une extrémité axialement intérieure appelée bourrelet d'extenseur et destinée à assurer l'accrochage de l'extenseur sur la jante. Un tel extenseur comprend aussi une extrémité axialement extérieure destinée à recevoir et immobiliser axialement un bourrelet de pneumatique. Un corps relie les deux extrémités respectivement axialement intérieure et axialement extérieure.

Les extenseurs sont montés sur une jante qui est la plupart du temps une pièce en aluminium. La jante présente de chaque côté un crochet de jante destiné à assurer en particulier l'immobilisation axialement de l'extenseur. Une autre fonction de ce crochet de jante est d'imposer à l'extenseur une déformation de manière à former un bossage (habituellement connu pour les jantes sous la dénomination « hump ») que le pneumatique franchit au gonflage (comme pour un ensemble pneu et jante classique, sans extenseur). Ce bossage contribue à empêcher ou retarder le décoincement du pneumatique en cas d'utilisation à de pression de gonflage anormalement basse (or on sait que, en cas de décoincement, la capacité de guidage du pneumatique est très largement amoindrie et même disparait si le pneumatique quitte la jante, ce qui devient très probable.

La hauteur radiale de ce crochet de jante, pour les ensembles roulants avec extenseur, avait été choisie lors des travaux exploratoires en adoptant un crochet de type « B » tel que décrit par l'ETRTO (hauteur 14.1 mm + ou - 0.6), alors que, le plus fréquemment, les crochets pour roues de véhicules de tourisme sont de type « J ». Un tel crochet B, que l'on qualifie dans le présent mémoire de crochet haut, a certes l'avantage de contribuer à de bonnes valeurs de décoincement des ensembles pneumatiques/jantes usuels (sous faible pression), mais dans le contexte d'un montage avec extenseurs, il pose aussi des problèmes.

D'une part, le hump est suffisamment grand pour conduire à des valeurs de pression de gonflage trop grandes pour la simple mise en place du pneumatique monté sur jante avec extenseurs. D'autre part, ce crochet impose à l'extenseur une grande déformation à l'endroit où celui-ci le surplombe radialement. En effet, la forme naturelle de l'extenseur en sortie de moule, à l'état libre de toute contrainte, est sensiblement cylindrique (en fait très légèrement conique), de diamètre bien inférieur au diamètre mesuré au sommet du crochet métallique. La mise en place de l'extenseur impose donc une grande déformation locale radiale à l'extenseur. Comme à cet endroit les renforts au sein de l'extenseur sont en général de type « carcasse croisée », l'extenseur oppose à cette déformation une grande résistance. Il s'ensuit une grande pression entre l'extenseur et le crochet métallique à l'endroit du bossage comparable à un hump de jante classique.

En raison de la bonne adhérence entre le caoutchouc et l'aluminium, on comprend bien qu'une certaine partie de l'effort axial générée par le pneu sous pression et tendant à étirer axialement l'extenseur est pour partie reprise au niveau de cette interface, alors qu'on préférerait, pour assurer un montage isostatique de l'extenseur, que tout cet effort soit repris par l'appui sur le crochet métallique du talon de l'extenseur. En l'état, le fait que le positionnement de l'extenseur ne soit pas clairement défini puisque non forcément identiquement en place tout au long de son périmètre conduit à des irrégularités géométriques, elles-mêmes responsables de vibrations au roulage pour raison de non-uniformités.

Les observations du déposant l'ont ainsi amené à s'écarter des règles habituelles de construction des jantes.

### Description brève de l'invention

L'objectif de la présente invention est de définir une jante pour ensemble roulant avec extenseur flexible, ayant une bonne capacité de guidage tout en étant résistant aux chocs de trottoir, et tout en assurant un montage précis et endurant de l'extenseur sur une jante.

Cet objectif a été atteint, de manière surprenante, en s'écartant des enseignements antérieurs selon lequel le crochet ou rebord de jante doit avoir une hauteur radiale importante.

L'invention a donc pour objet une jante pour ensemble roulant avec extenseur flexible, la jante ayant un axe de rotation DD', ladite jante comportant un siège sur jante prolongé axialement vers l'extérieur par un rebord de jante, ledit rebord de jante comportant une première portion orientée sensiblement dans un plan perpendiculaire à l'axe de rotation DD' et située radialement à l'extérieur par rapport audit siège sur jante, caractérisée en ce que la hauteur radiale mesurée entre le point d'intersection entre la trace du siège sur jante et la trace de la première portion, et l'extrémité de la portion radialement la plus à l'extérieur dudit rebord de jante est inférieure à 10 mm.

Ainsi, alors que la hauteur usuelle des crochets B est de 14,1 mm, selon l'invention, elle est de préférence de l'ordre de 8,5 mm. Le montage du pneu est beaucoup plus aisé. Une pression de gonflage de 2,5 bar suffit pour mettre en place les extenseurs. De plus, les tests ont montré que cette configuration permet de toujours garantir la tenue à l'éclatement de l'ensemble (jusqu'à 20 bar) et la ruine de l'ensemble a toujours lieu ailleurs qu'à ce niveau. Par ailleurs, les tests ont montré que sur cet ensemble, le décoincement dynamique se produisait à des pressions inférieures à celles constatées pour l'ensemble de référence (sans extenseurs) : décoincement pour le témoin : 1,4 bar, décoincement pour les roues avec extenseurs : 1,2 et 1,3 bar (selon le type de tringle). Signalons que la tenue de l'ensemble pneumatique monté sur jante au moyen d'extenseurs dépend aussi du type de pneumatique, de la raideur en torsion de l'extrémité axialement extérieure de l'extenseur (du type de renfort que contient ladite extrémité, et de la pression de gonflage.

Rappelons qu'un extenseur comporte une extrémité axialement intérieure, une extrémité axialement extérieure et un corps orienté sensiblement axialement et disposé entre lesdites extrémités axialement intérieure et extérieure. Soulignons qu'une telle jante, à rebord de hauteur radiale réduite, rend industriellement possible l'utilisation d'extenseurs moulés de telle façon que ledit corps est moulé dans une configuration sensiblement cylindrique (ou légèrement tronconique), c'est-à-dire sans forme courbe, ce qui facilite la fabrication industrielle des extenseurs. Autrement dit, on pourrait utiliser une jante à rebord de grande hauteur, conforme à ce que dictent les normes, mais alors il serait préférable d'adopter un extenseur dont le corps, vu en section méridienne, serait optimisé, présentant une forme courbée.

L'invention apporte une nouvelle fonction à la jante, à savoir, de par la portée rigide présente radialement sous la pointe du bourrelet du pneu, épousant sensiblement la forme de l'extenseur, offrir un support rigide qui impose au pneu d'amorcer un mouvement de basculement qui ne contrarie pas un déplacement radial suffisant du bourrelet lorsque l'on considère la partie de celui-ci axialement la plus à l'extérieur. De préférence, le rebord de jante comporte une seconde portion radialement extérieure sensiblement tronconique, et le sommet virtuel déterminé en prolongeant la portion tronconique est situé axialement vers l'extérieur par rapport au siège sur jante ; de façon avantageuse, l'angle α de ladite face tronconique est compris entre 5° et 30°.

Les observations montrent que la performance en endurance face aux chocs orientés radialement est comparable, voire meilleure, à ce qui est obtenu en appliquant les enseignements de l'état de la technique. De préférence, l'ensemble roulant comporte deux extenseurs qui assurent la jonction entre la jante de montage et les deux bourrelets du pneumatique.

Chaque extenseur est flexible ; on entend par là qu'il est déformable élastiquement en permettant, vu en coupe méridienne, une flexion et un déplacement radial sans quitter le domaine élastique, aux sollicitations de service, lors de l'usage du pneumatique gonflé à pression nominale. A noter que la déformation axiale de l'extenseur est pratiquement négligeable en fonctionnement normal du pneumatique gonflé à pression nominale.

La jante est de préférence constituée en un matériau choisi parmi l'acier ou les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes combinaisons de matériaux.

En ce qui concerne d'autres aspects de la jante en soi ou de l'extenseur en soi, le lecteur est renvoyé aux documents WO2015/086662 et WO2016/046197 précités.

De préférence, la jante comporte une seconde portion inclinée vers l'extérieur, située axialement à l'extérieur par rapport à ladite première portion et située au moins en partie radialement à l'extérieur par rapport audit siège sur jante, et une portion de raccordement située axialement entre ladite première portion et ladite seconde portion.

En fait, l'invention propose une jante dont le rebord, qui dans cette variante préférée est de largeur importante, a une forme conçue pour offrir à la face radialement intérieure de l'extenseur un support de forme appropriée pour que ledit extenseur, dans l'ensemble pneumatique gonflé à pression nominale, se déforme et adopte une forme favorisant un bon fonctionnement.

Ainsi, dans un mode particulier de réalisation assez simple à exécuter, ladite seconde portion est sensiblement tronconique, le sommet virtuel déterminé en prolongeant ladite portion sensiblement tronconique étant situé axialement vers l'extérieur par rapport audit siège sur jante. Avantageusement, ladite seconde portion sensiblement tronconique forme avec l'axe de rotation DD' un angle α de valeur comprise entre 5° et 30°. De préférence, la largeur axiale cumulée de la seconde portion et la portion de raccordement est comprise entre 15 mm et 21,5 mm.

L'invention a aussi pour objet un ensemble d'une jante telle que précédemment décrite et d'un extenseur flexible comprenant, une extrémité axialement intérieure appelée bourrelet d'extenseur et destinée à assurer l'accrochage de l'extenseur sur la jante, une extrémité axialement extérieure destinée à recevoir un bourrelet de pneumatique, et un corps flexible reliant les deux extrémités respectivement axialement intérieure et axialement extérieure.

### Description des Figures

L'invention est décrite ci-après à l'aide des figures 1 à 7, données uniquement à titre d'illustration :
- la figure 1 est une coupe méridienne d'un ensemble roulant avec une jante selon l'invention,
- la figure 2 est un agrandissement de la partie gauche de l'ensemble,
- la figure 3 est une coupe méridienne, partielle, d'une jante selon l'invention,
- les figures 4 et 5 présentent un test de résistance à un choc trottoir, respectivement en vue de côté et en vue de dessus,
- la figure 6 présente des résultats de performance d'ensembles roulants selon l'invention au test de choc trottoir,
- la figure 7 est une coupe méridienne, partielle, d'un autre mode de réalisation d'une jante selon l'invention.

### Description détaillée de l'invention

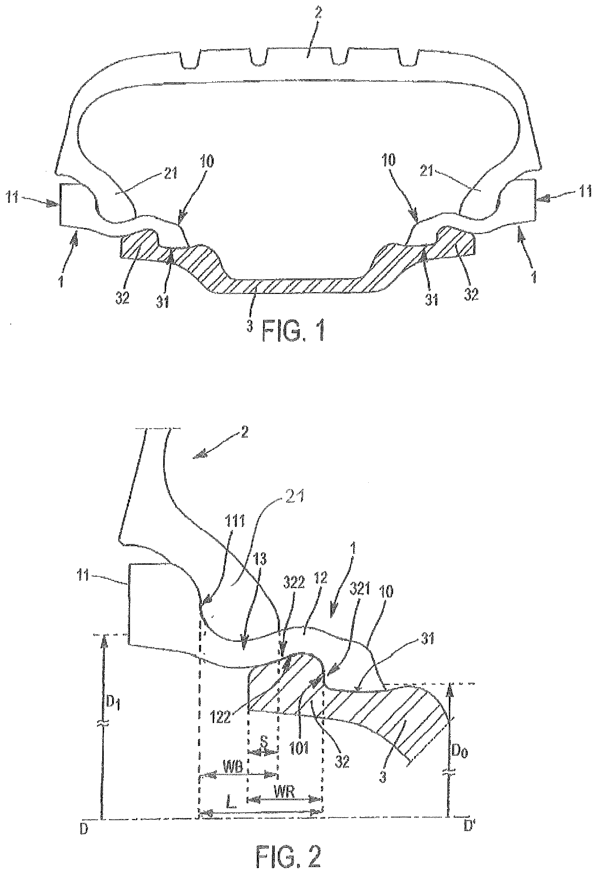

La figure 1 montre un ensemble roulant selon l'invention. Cet ensemble comprend deux extenseurs 1 identiques, un pneumatique 2 et une jante 3. Le pneumatique 2 comporte deux bourrelets 21. De façon générale, signalons que le choix de largeur de jante est tel que, compte tenu de la largeur L des extenseurs (voir figure 2), le pneumatique se trouve dans une configuration aussi semblable que possible à la configuration qu'il aurait s'il était monté directement, sans extenseurs, sur une jante appropriée.

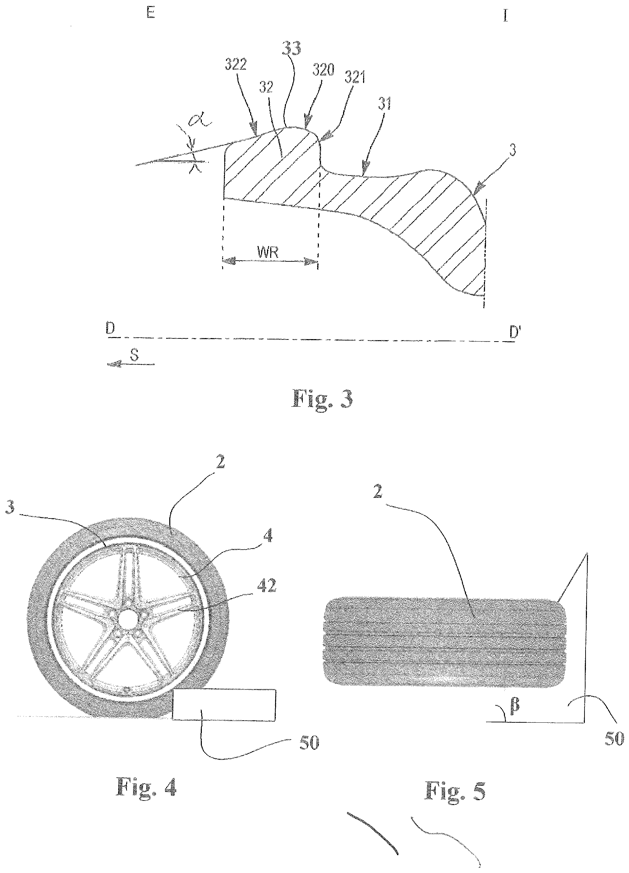

En consultant plus particulièrement la figure 3, on voit que la jante 3 comporte deux sièges sur jante 31, chacun prolongé par un rebord 32 de jante. Le rebord 32 de jante comporte une face d'appui 33 radialement extérieure destinée à servir de support au corps de l'extenseur. La face d'appui 33 du rebord de jante 32 est en contact avec l'extenseur 1 lorsque le pneumatique est monté sur les extenseurs et que ceux-ci sont montés sur la jante, le pneumatique étant gonflé à la pression nominale. Cette face d'appui 33 comporte une première portion 321 orientée sensiblement dans un plan perpendiculaire à l'axe de rotation DD' de l'ensemble roulant, et située radialement à l'extérieur par rapport audit siège sur jante 31. La face d'appui 33 du rebord 32 de jante comporte une seconde portion 322 sensiblement tronconique, située axialement à l'extérieur par rapport à ladite première portion 321 et située au moins en partie radialement à l'extérieur par rapport audit siège sur jante 31, ladite seconde portion 322 est sensiblement tronconique, d'angle α valant 15°. La face d'appui 33 comprend aussi une portion de raccordement 320 entre ladite première portion 321 et ladite seconde portion 322. Dans l'exemple représenté, la largeur axiale WR du rebord de jante 32 est de 18,3 mm.

Les repères E et I à la figure 3 indiquent le côté axialement extérieur de la jante, respectivement le côté axialement intérieur. La seconde portion 322 est inclinée axialement vers l'extérieur : ainsi, en la prolongeant axialement vers l'extérieur, on rejoint l'axe DD' (position non à l'échelle par rapport à la jante 3) en un sommet virtuel S rejeté axialement très loin vers l'extérieur, ce qui est symbolisé par une flèche sous S à la figure 3.

L'invention peut être utilisée avec de nombreuses variantes de constitution interne du pneumatique 2, qui ne sont donc pas représentées, ainsi qu'avec de nombreuses variantes de constitution interne d'extenseur 1, qui ne sont donc pas représentées.

En revenant à la figure 2, on voit que chaque extenseur 1 comporte une extrémité axialement intérieure 10 destinée à être montée sur l'un desdits sièges sur jante 31. Il comporte une extrémité axialement extérieure 11 ainsi qu'un corps 12 orienté sensiblement axialement et disposé entre ladite extrémité axialement extérieure 11 et ladite extrémité axialement intérieure 10. Le corps 12 a une face radialement intérieure 122. L'extrémité axialement intérieure 10 de l'extenseur a une face de positionnement axial 101 sensiblement perpendiculaire à l'axe de rotation DD', et est immobilisée en étant plaquée axialement contre le rebord 32 de jante, sous l'effet de la pression de gonflage de l'ensemble roulant. L'extrémité axialement extérieure 11 présente un épaulement 111 formant en partie une face sensiblement perpendiculaire à l'axe de rotation DD'. Ledit extenseur 1 comporte un siège sur extenseur 13. Le bourrelet 21 a une largeur axiale WB à l'interface du bourrelet 21 avec le siège sur extenseur 13. Le bourrelet 21 est immobilisé en étant plaqué axialement contre ladite extrémité axialement extérieure 11 de l'extenseur, sous l'effet de la pression de gonflage de l'ensemble roulant.

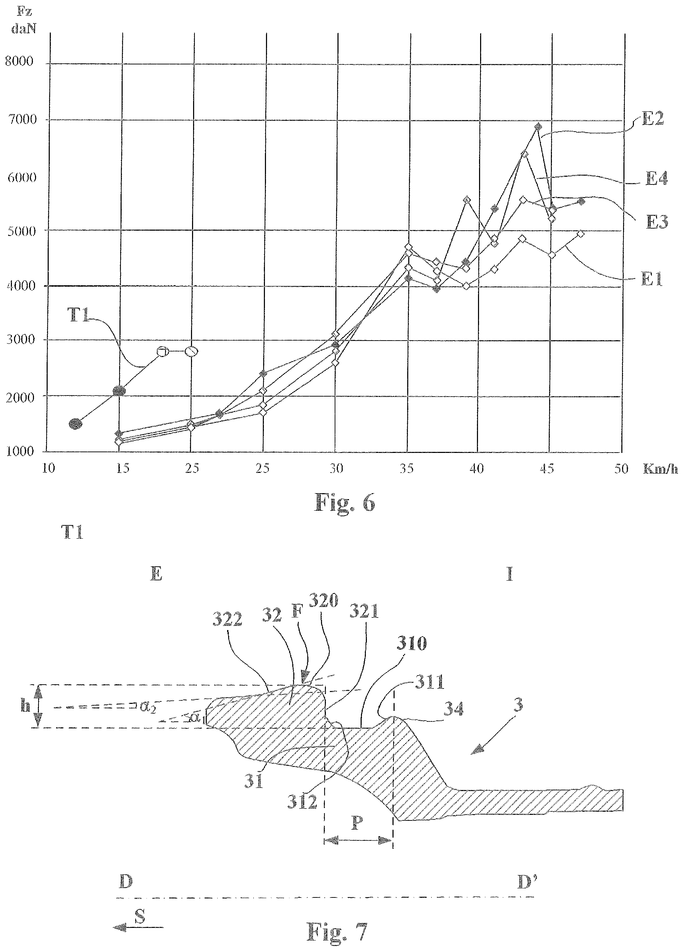

En prolongeant la trace de l'épaulement 111 de l'extrémité axialement extérieure 11 radialement vers l'intérieur et en prolongeant la trace du siège sur extenseur 13, on obtient un point qui est la trace d'un cercle de diamètre D₁, diamètre qui lui-même correspond au diamètre normalisé du pneumatique de l'ensemble roulant utilisant l'extenseur 1 selon l'invention. En prolongeant la trace de la face de positionnement axial 101 radialement vers l'intérieur et en prolongeant la trace du siège sur jante 31, on obtient un point qui est la trace d'un cercle de diamètre D₀ qui est le diamètre normalisé du siège sur jante 31. Pour une information sur les normes auquel il est fait référence, le lecteur consultera la documentation de l'ETRTO (European Tyre and Rim Technical Organisation). La hauteur h du rebord de jante mesurée entre le point d'intersection entre la trace du siège de jante 31 et la trace de la portion radiale 321 du rebord 32 et le point F radialement le plus extérieur du rebord 32 est de 8,5 mm (voir figure 7). Cela permet d'obtenir un bossage de l'extenseur approprié au maintien du bourrelet du pneumatique sur le siège sur extenseur sans entraîner de contraintes trop élevées dans la structure de l'extenseur.

Une fois le montage effectué, le bourrelet du pneumatique impose une contraction circonférentielle de l'extenseur 1. Le rebord 32 de jante s'étend axialement sous le bourrelet 21 sur une distance S telle que le rapport S/WB est égal à 0,3. Ainsi, on voit que la face radialement intérieure 122 s'appuie sur la face d'appui radialement extérieure 33 du rebord de jante 32 sur toute sa largeur axiale WR, laquelle vaut 18,3 mm et est bien plus importante que dans les réalisations connues, ce qui contraint le bourrelet 21 du pneumatique à basculer dans un mouvement de rotation (dans le sens trigonométrique pour le côté du pneumatique 2 représenté à la figure 2) lorsqu'il subit une augmentation de charge radiale significative.

La figure 7 présente en coupe méridienne partielle un mode de réalisation alternatif d'une jante selon l'un des objets de l'invention. Les références identiques correspondent à des parties identiques ou similaires.

Cette jante 3 se différencie de celle illustrée à la figure 1 par un siège de jante 310 sensiblement cylindrique entre deux zones de transition 311 et 312 et une largeur axiale P fortement réduite, de l'ordre de 15,3 mm. Ces deux modifications permettent de bloquer en position de service le bourrelet d'extenseur de l'extenseur 1 dès son montage sur la jante sans devoir compter sur la pression de gonflage de l'ensemble roulant au moment du montage du pneumatique sur l'ensemble jante et extenseur.

La résistance aux chocs trottoir a été quantifiée en faisant passer les ensembles roulants sur un trottoir 50 de 90 mm de haut avec un angle β de 60° par rapport à la direction d'avancement du pneumatique (un angle de 90° correspondant à une direction perpendiculaire à la direction d'avancement du pneumatique, voir figures 4 et 5) ; le bord du trottoir a un rayon de courbure de 10 mm ; on effectue des passages successifs à des vitesses différentes jusqu'à ce que le pneumatique perde sa pression de gonflage ou jusqu'à ce que le pneumatique ou l'extenseur ou la roue se déforme de façon permanente et on fait l'acquisition pour chaque passage des efforts transmis au trottoir et/ou au moyeu sur le véhicule. On compare un ensemble de référence à un ensemble selon l'invention. L'ensemble de référence T1 est un ensemble classique sans extenseur comportant un pneumatique 245/35 R 20 de type MICHELIN ^{®} PS4S, et une jante de largeur valant 8 pouces, le rebord étant celui du crochet J. Comme le montre la figure 4, les roues 4 des ensembles roulants testés sont des roues à rayons 42.

Quatre ensembles roulants comportant des extenseurs ont été testés avec des valeurs du rapport S/WB variables :
Le premier E1, avec une jante telle que présentée à la figure 3 a un rapport S/WB égal à 0,27 ;
Le deuxième E2 avec une jante telle que présentée à la figure 7 a un rapport S/WB égal à 0,27 ;
Le troisième E3 avec une jante telle que présentée à la figure 7 a un rapport S/WB égal à 0,49 ; et
Le quatrième E4 avec une jante telle que présentée à la figure 7 a un rapport S/WB égal à 0,70.

Les résultats des essais de choc trottoir sont présentés à la figure 6.

Le graphe de la figure 6 présente en abscisses la vitesse d'avancement du pneumatique en km/h et en ordonnées la valeur maximale de l'effort radial mesuré au sol lors du choc exprimé en daN.

L'ensemble roulant témoin T1 sans extenseurs présente une soufflure du flanc dès l'essai à 18 km/h et une crevaison dès 20 km/h.

Pour les quatre ensembles roulants comportant des extenseurs, dans toute la gamme de vitesses testées, aucun pneumatique n'a présenté de dommage bien que les valeurs maximales des efforts radiaux augmentent très sensiblement avec la vitesse.

Il est à noter que les valeurs maximales des efforts radiaux sont notablement différentes en fonction de l'endroit du choc sur la roue. Fz est plus élevée si le choc se porte sur un rayon de la roue relativement à un choc entre deux rayons.

En conséquence, il n'est pas possible de différencier les résultats pour ces quatre ensembles, on note cependant que l'augmentation du rapport S/WB ne diminue pas la résistance de l'ensemble roulant aux chocs trottoir même si une augmentation des efforts radiaux semble se dessiner avec l'augmentation de la valeur du rapport S/WB.

Pour l'ensemble roulant E1, on a noté une déformation permanente de la roue à l'endroit du choc dès 42 km/h. La meilleure résistance des roues des trois autres ensembles roulants selon l'invention peut être liée à la modification de la géométrie du rebord de jante ainsi qu'à l'extension vers l'extérieur du rebord de jante.

En revanche, lors d'essais de comportement on a noté une amélioration sensible de la précision de conduite avec l'augmentation du rapport S/WB.

L'ensemble roulant selon l'invention permet donc d'améliorer de manière très notable le guidage véhicule tout en maintenant une très bonne capacité de résistance au choc.

## Revendications

1. Jante (3) pour ensemble roulant avec extenseur flexible, la jante ayant un axe de rotation DD', ladite jante comportant un siège sur jante (31) prolongé axialement vers l'extérieur par un rebord (32) de jante, ledit rebord (32) de jante comportant une première portion (321) orientée sensiblement dans un plan perpendiculaire à l'axe de rotation DD' et située radialement à l'extérieur par rapport audit siège sur jante (31), **caractérisée en ce que** la hauteur radiale mesurée entre le point d'intersection entre la trace du siège sur jante (31) et la trace de la première portion (321), et l'extrémité de la portion (320) dudit rebord (32) sur jante radialement la plus à l'extérieur est inférieure à 10 mm.

2. Jante (3) selon la revendication 1, comportant une seconde portion (322) inclinée vers l'extérieur, située axialement à l'extérieur par rapport à ladite première portion (321) et située au moins en partie radialement à l'extérieur par rapport audit siège sur jante (31) et une portion de raccordement (322) située axialement entre ladite première portion (321) et ladite seconde portion (322).

3. Jante selon la revendication 2, dans laquelle ladite seconde portion (322) est sensiblement tronconique, le sommet virtuel déterminé en prolongeant ladite portion sensiblement tronconique étant situé axialement vers l'extérieur par rapport audit siège sur jante (31).

4. Jante selon la revendication 3, dans laquelle ladite seconde portion (322) forme avec l'axe de rotation DD' un angle α de valeur comprise entre 5° et 30°.

5. Jante selon l'une des revendications 2 à 4, dans laquelle ladite seconde portion (322) et ladite portion de raccordement (320) présentent une largeur axiale cumulée WR comprise entre 15 mm et 21,5 mm.

6. Ensemble formé par une jante selon l'une quelconque des revendications 1 à 5 et un extenseur flexible comprenant, une extrémité axialement intérieure (10) appelée bourrelet d'extenseur et destinée à assurer l'accrochage de l'extenseur sur la jante, une extrémité axialement extérieure (11) destinée à recevoir un bourrelet de pneumatique, et un corps flexible (12) reliant les deux extrémités respectivement axialement intérieure et axialement extérieure.

## Patentansprüche

1. Felge (3) für eine Fahreinheit mit flexiblem Adapter, wobei die Felge eine Drehachse DD' aufweist, wobei die Felge einen Felgensitz (31) umfasst, der durch einen Felgenrand (32) axial nach außen verlängert wird, wobei der Felgenrand (32) einen ersten Abschnitt (321) umfasst, der im Wesentlichen in einer zur Drehachse DD' senkrechten Ebene ausgerichtet ist und sich in Bezug auf den Felgensitz (31) radial außen befindet, **dadurch gekennzeichnet, dass** die zwischen dem Schnittpunkt zwischen der Spur des Felgensitzes (31) und der Spur des ersten Abschnitts (321) und dem radial äußersten Ende des Abschnitts (320) des Felgenrandes (32) gemessene radiale Höhe kleiner als 10 mm ist.

2. Felge (3) nach Anspruch 1, welche einen nach außen geneigten zweiten Abschnitt (322), der sich in Bezug auf den ersten Abschnitt (321) axial außen befindet und sich in Bezug auf den Felgensitz (31) wenigstens zum Teil radial außen befindet, und einen Anschlussabschnitt (322), der sich axial zwischen dem ersten Abschnitt (321) und dem zweiten Abschnitt (322) befindet, umfasst.

3. Felge nach Anspruch 2, wobei der zweite Abschnitt (322) im Wesentlichen kegelstumpfförmig ist, wobei die virtuelle Spitze, die bestimmt wird, indem der im Wesentlichen kegelstumpfförmige Abschnitt verlängert wird, sich in Bezug auf den Felgensitz (31) axial außen befindet.

4. Felge nach Anspruch 3, wobei der zweite Abschnitt (322) mit der Drehachse DD' einen Winkel α mit einem Wert zwischen 5° und 30° bildet.

5. Felge nach einem der Ansprüche 2 bis 4, wobei der zweite Abschnitt (322) und der Anschlussabschnitt (320) eine kumulierte axiale Breite WR zwischen 15 mm und 21,5 mm aufweisen.

6. Anordnung, die von einer Felge nach einem der Ansprüche 1 bis 5 und einem flexiblen Adapter gebildet wird, der ein axial inneres Ende (10), das Adapterwulst genannt wird und dazu bestimmt ist, das Einhängen des Adapters auf der Felge sicherzustellen, ein axial äußeres Ende (11), das dazu bestimmt ist, einen Reifenwulst aufzunehmen, und einen flexiblen Körper (12), der die zwei Enden, das axial innere bzw. axial äußere, verbindet, umfasst.

## Claims

1. Rim (3) for a rolling assembly having a flexible extender, the rim having an axis of rotation DD', said rim having a rim seat (31) extended axially towards the outside by a rim flange (32), said rim flange (32) having a first portion (321) that is oriented substantially in a plane perpendicular to the axis of rotation DD' and situated radially on the outside with respect to said rim seat (31), **characterized in that** the radial height measured between the intersection point between the line of the rim seat (31) and the line of the first portion (321), and the end of the radially outermost portion (320) of said rim flange (32) is less than 10 mm.

2. Rim (3) according to Claim 1, which has a second portion (322) that is inclined towards the outside, is situated axially on the outside with respect to said first portion (321) and is situated at least partially radially on the outside with respect to said rim seat (31), and a connecting portion (322) that is situated axially between said first portion (321) and said second portion (322).

3. Rim according to Claim 2, wherein said second portion (322) is substantially frustoconical, the virtual vertex determined by continuing said substantially frustoconical portion being situated axially towards the outside with respect to said rim seat (31).

4. Rim according to Claim 3, wherein said second portion (322) forms an angle □□with a value of between 5° and 30° with the axis of rotation DD'.

5. Rim according to one of Claims 2 to 4, wherein said second portion (322) and said connecting portion (320) have a cumulative axial width WR of between 15 mm and 21.5 mm.

6. Assembly formed by a rim according to any one of Claims 1 to 5 and a flexible extender comprising an axially inner end (10), known as extender bead, that is intended to couple the extender to the rim, an axially outer end (11) that is intended to receive a tyre bead, and a flexible body (12) that connects the axially inner end and the axially outer end.
